# EUROPEAN PATENT APPLICATION

(11) **EP 0 831 366 A1**
(43) Date of publication of application: **25.03.1998**
(21) Application number: 97202811.2
(22) Date of filing: 13.09.1997
(51) Int. Cl.: G03C 1/95, G03C 1/32, C08F 2/18

(54) **Synthesis of matte beads containing a carboxylic acid monomer and their use in photographic elements**

(30) Priority: 24.09.1996 US 719102
(71) Applicant: EASTMAN KODAK COMPANY, Rochester, New York 14650 (US)
(72) Inventor: Smith, Dennis Edward, Eastman Kodak Company, Rochester, New York 14650-2201 (US); Muehlbauer, John Leonard, Eastman Kodak Company, Rochester, New York 14650-2201 (US); Wang, Yongcai, Eastman Kodak Company, Rochester, New York 14650-2201 (US)
(74) Representative: Parent, Yves

(57) **Abstract**

The present invention is a process for making polymeric particles by reacting an ethylenically unsaturated monomer as a dispersed phase suspended in an aqueous phase. The aqueous phase contains a water-insoluble particulate stabilizer having a size less than 100 nanometers in an effective amount of water-soluble inorganic salt to allow formation of stable monomer droplets in the aqueous phase, the monomer droplets include at least 20% of a carboxylic acid-containing monomer. The present invention also provides an imaging element comprising a support and at least one layer containing polymer particles of the formula: (A)ₓ(B)y, where A is ethylenically unsaturated monomer containing carboxylic acid groups, B is a water insoluble ethylenically unsaturated monomer, x is greater than 20% and y is equal to 100% minus x. The polymer particles are covered with a layer of water-insoluble solid particulate stabilizer having a size less than 100 nanometers.

## Description

### FIELD OF THE INVENTION

This invention relates to photographic imaging elements and particularly to silver halide photographic imaging elements containing matting agents. More particularly, the present invention provides a synthesis of matting agents containing carboxylic acid groups.

### BACKGROUND OF THE INVENTION

It is conventional to incorporate finely powdered grains or matting agents into the protective layer of a photographic element to increase the surface roughness to achieve the following: (1) reduce self-adhering of the material, (2) reduce sticking of the material to manufacturing and processing devices, (3) improve the antistatic properties of the material, and (4) improve the vacuum adhesiveness of the material in contact exposure to prevent Newton's rings. The matting agents are commonly very small particles of organic or inorganic materials, such as silicone dioxide, magnesium oxide, titanium dioxide, calcium carbonate, poly(methyl methacrylate), poly(vinyltoluene), poly(methyl methacrylate-co-methacrylic acid), and so on.

Matting of the protective layer suffers, however, from various disadvantages. For example, it reduces the transparency of the photographic elements after processing and increases the graininess of the picture. It has been heretofore known to include photographic processing removable polymer particles, sometimes referred to as soluble matte, in protective layers. High concentrations of soluble matte are needed especially when the unprocessed photographic elements are used or stored at high relative humidities and at elevated temperatures of from 30 to 40°C. High concentrations are also needed to prevent contact specks which cause adverse sensitometric defects when the unprocessed materials are rolled up.

The use of a high level of soluble matte provides a satisfactory solution to conventional films for amateur use, for which the processed, or developed, film strips are returned to the consumer in synthetic resin pouches, or sleeves, where the frontside and backside of the film do not come in contact with each other.

Recent patents have disclosed photographic systems where the processed element may be reintroduced into a cassette. This system allows for compact and clean storage of the processed element until such time when it may be removed for additional prints or to interface with display equipment. Storage in the cassette is preferred to facilitate location of the desired exposed frame and to minimize contact with the negative during subsequent usage. U.S. Patent No. 5,173,739 discloses a cassette designed to thrust the photographic element from the cassette, eliminating the need to contact the film with mechanical or manual means. Published European Patent Application 0 476 535 A1 describes how the developed film may be stored in such a cassette. The dimensions of such a so-called thrust cassette require that the processed photographic element is wound tightly and under pressure, causing direct close contact between the front and back sides which results in ferrotyping, especially at high temperature and high relative humidity. Soluble matte does not prevent this problem.

In recent years, rapid processing and high temperature drying after processing have become common practice for photographic materials. The high temperature dried films, for example 60°C (harsh drying), tend to aggravate ferrotyping which results from close contact, especially under elevated humidity and temperature. When ferrotyping is sufficiently severe, the resulting prints are unacceptable. Films dried at lower temperatures, for example 40°C (mild drying), tend to show much less ferrotyping. The reason for this difference is not understood.

It is desirable to employ matting agents in photographic materials that include carboxylic acid functional groups such as the aforementioned soluble mattes. It is also desirable to use lightly crosslinked matting agents containing carboxylic acid groups which provide photographic materials with excellent image quality and superior resistance to sticking and ferrotyping as described in U.S. Patent Patent Application Serial No. 08/633,281. A matting agent containing carboxylic acid functional groups is difficult to manufacture using known methods.

Suspension polymerization is commonly conducted in an aqueous suspending media by suspending discrete droplets of monomer in the aqueous phase, initiating a free radical polymerization and continuing the polymerization until the suspended droplets have formed solid, spherical particles. Such particles, are useful as mattes in photographic elements. Many common monomers such as styrene, alpha-methyl styrene, methyl methacrylate, ethylacrylate and the like are not soluble in water and thus are well suited to suspension polymerization. However, some monomers as for example, acrylic acid, methacrylic acid, hydroxyethyl methacrylate, acrylonitrile, acrylamide, methacrylamide, vinylpyrridine, dimethylaminoethyl methacrylate and the like are soluble in water to a significant extent.

When suspension polymerization is attempted with a monomer which is partially or fully water-soluble, monomer partitions into the aqueous phase. In the case of fully water-soluble monomers, the suspended droplets may never even form and even when the droplets form several undesired phenomenona occur during polymerization such as precipitation of polymers in the aqueous phase, caused by dissolved monomer forming insoluble polymer which precipitates from solution, or formation of particle agglomerates caused by the presence of soluble polymers in the aqueous phase. The agglomerates lead to a polymer product which when used as a photographic matting agent plugs filters used in coating operations and causes defects such as visible spots, coating streaks and the like.

It has been known to add salt to the aqueous phase when performing suspension polymerization with aqueous soluble monomers; however, most suspension stabilizers are insoluble or unstable in high salt aqueous phase and thus do not adequately protect the monomer droplets allowing them to agglomerate.

U.S. Patent 5,498,678, describes that when one saturates an aqueous suspending medium with a salt, for example, an inorganic salt such as sodium chloride or sodium sulfate to reduce the solubility of the monomer in the aqueous medium in a suspension polymerization of water-soluble monomers and uses cellulosic dispersant, some of the undesired phenomenona described above is reduced but not eliminated.

U.S. Patent 4,870,143 teaches that adding an inorganic salt to a suspension polymerization process increases the specific gravity of the aqueous phase to prevent monomer creaming. This patent teaches that a polycarboxylic acid can be used as a surfactant or suspension stabilizer in the suspension polymerization process. No mention is made of using a carboxylic acid containing monomers in the suspension polymerization process.

U.S. Patent 4,868,238 teaches the use of an inert electrolyte of up to 5% in a suspension polymerization process which does not include carboxylic acid containing monomers.

U.S. Patent 3,976,629 describes a process for making polymeric beads. In this suspension polymerization process the suspending agent is soluble in the aqueous phase.

U.S. Patent 4,920,004 discloses a process for preparing polymeric particles useful in photographic elements. However, there is no specific teaching on how to make a polymeric particle containing carboxylic acid groups.

European Patent Application 0 405 872 teaches a suspension polymerization process of styrene and methacrylic acid. It is taught that a salt concentration greater than 5% interferes with the suspending agent.

European Patent Application 0 410 607 teaches a method of suspension polymerization which produces polymeric beads of a large size 1.0 mm which would be unsuitable in photographic applications.

The present invention provides a novel method of producing matting agents containing carboxylic acid functional groups which are especially useful in photographic elements.

### SUMMARY OF THE INVENTION

The present invention provides a process for making polymeric particles which comprises reacting an ethylenically unsaturated monomer as a dispersed phase suspended in an aqueous phase. The aqueous phase contains a water-insoluble particulate stabilizer having a size of less than 100 nanometers and an effective amount of water-soluble inorganic salt to allow formation of stable monomer droplets in the aqueous phase, the monomer droplets comprising at least 20% of a carboxylic acid-containing monomer.

The present invention also provides an imaging element comprising a support and at least one layer containing polymer particles of the formula (A)ₓ(B)_{y}, where A is an ethylenically unsaturated monomer containing carboxylic acid groups, B is a water-insoluble ethylenically unsaturated monomer, x is greater than 20% and y is equal to 100% minus x. The particles are covered with a layer of water-insoluble particulate stabilizer having a size less than 100 nanometers.

### DESCRIPTION OF PREFERRED EMBODIMENTS

Limited coalescence is a term that refers to specific type of suspension polymerization. In limited coalescence processes polyaddition polymerizable monomer or monomers are added to an aqueous medium containing a particulate suspending agent to form a discontinuous (oil droplet) phase in a continuous (water) phase. The mixture is subjected to shearing forces, by agitation, homogenization and the like to reduce the size of the droplets. After shearing is stopped and equilibrium is reached with respect to the size of the droplets as a result of the stabilizing action of the particulate suspending agent in coating the surface of the droplets, the polymerization is completed to form an aqueous suspension of the polymer particles. This process is described in U.S. Patent Nos. 2,932,629; 5,279,934; and 5,378,577 incorporated herein by reference.

The limited coalescence process is difficult when a high concentration of water-soluble monomer is used. The present inventors have found unexpectedly polymer particles or mattes can be easily made by limited coalescence suspension polymerization from monomers mixtures containing greater than 20% of ethylenically unsaturated monomers containing carboxylic acid groups when using water soluble inorganic salts. When a water-soluble salt such as sodium chloride is added to the aqueous phase, it has been found that matte beads can be reproducibly made which have an excellent size distribution and when coated in a photographic element give excellent properties.

Water-soluble salts suitable for use in the present invention can contain monovalent, divalent and trivalent cations. The salts include aluminum nitrate, aluminum sulfate, ammonium chloride, ammonium nitrate, ammonium sulfate, barium nitrate, borax, calcium chloride, calcium nitrate, calcium sulfate, diammonium sulfate, disodium phosphate, magnesium chloride, magnesium nitrate, magnesium sulfate, potassium chloride, sodium acetate, sodium carbonate, sodium chloride, sodium metaborate, sodium nitrate, sodium sulfate, trisodium phosphate, zinc chloride, zinc nitrate, zinc sulfate and the like. Preferably the water-soluble salts are sodium chloride and potassium chloride.

Monomers containing carboxylic acid functionalities that are soluble in water (monomer A) include acrylic monomers such as acrylic acid, methacrylic acid, ethacrylic acid, itaconic acid, maleic acid, fumaric acid; monoalkyl itaconate including monomethyl itaconate; monoethyl itaconate, and monobutyl itaconate, monoalkyl maleate including monomethyl maleate, monoethyl maleate, monobutyl maleate; citraconic acid; styrenecarboxylic acid; mixtures thereof and the like. Preferably, monomer A is acrylic acid, methacrylic acid, ethacrylic acid or itaconic acid. Most preferably, monomer A is methacrylic acid.

Suitable ethylenically unsaturated monomers which can be used as component B include alkyl esters of acrylic acid or methacrylic acid, such as, methyl methacrylate, ethyl methacrylate, butyl methacrylate, ethyl acrylate, butyl acrylate, hexyl acrylate, n-octyl acrylate, lauryl methacrylate, 2-ethylhexyl methacrylate, nonyl acrylate, benzyl methacrylate; the hydroxyalkyl esters of the same acids, such as, 2-hydroxyethyl acrylate, 2-hydroxyethyl methacrylate, and 2-hydroxypropyl methacrylate; thenitrile and amides of the same acids such as acrylonitrile, methacrylonitrile, acrylamide and methacrylamide; vinyl esters, such as, vinyl acetate, vinyl propionate, vinylidene chloride; vinyl chloride; and vinyl aromatic compounds, such as, styrene, t-butyl styrene, ethyl vinyl benzene, vinyl toluene; dialkyl maleates; dialkyl itaconates; dialkyl methylene-malonates; mixtures thereof and the like. Additionally, monomer B can be polyfunctional with respect to the polymerization reaction.

Suitable polyfunctional ethylenically unsaturated crosslinking monomers which can be used as component B of the present include esters of unsaturated monohydric alcohols with unsaturated monocarboxylic acids, such as allyl methacrylate, allyl acrylate, butenyl acrylate, undecenyl acrylate, undecenyl methacrylate, vinyl acrylate, vinyl methacrylate; dienes such as butadiene and isoprene; esters of saturated glycols or diols with unsaturated monocarboxylic acids, such as ethylene glycol diacrylate, ethylene glycol dimethacrylate, triethylene glycol dimethacrylate, 1,4-butanediol dimethacrylate, 1,3-butanediol dimethacrylate; and polyfunctional aromatic compounds such as divinyl benzene; higher functional crosslinking monomers such as trimethyol propane trimethacrylate, pentaerythritol tetramethacrylate mixtures thereof and the like.

Preferably, monomer B is styrene, vinyl toluene, methyl methacrylate, ethylene glycol dimethacrylate, ethylene glycol diacrylate, divinylbenzene or ethyl methacrylate. Most preferably, monomer B is methyl methacrylate or ethylene glycol dimethacrylate.

The particulate suspension stabilizers or water insoluble solid suspending agents employed in the practice of this invention include any of the solid colloidal materials that are known in prior art to be suitable for this purpose. Such stabilizers or suspending agents provide a third phase because they are insoluble in both the aqueous suspension medium and in the suspended droplets. They are also nondispersible in the droplets, but wettable or can be made to be wettable by the droplets. They are more hydrophilic than oleophilic, and more hydrophilic than the droplets, so that they can remain at the interface of the aqueous suspension medium and the suspended droplets. Such stabilizers can be inorganic materials such as insoluble metal salts or oxides or clays or can be organic materials such as starches, sulfonated crosslinked organic homopolymers and resinous polymers, as described, for example, in U.S. Patent No. 2,932,629. Silica, as described in U.S. Patent No. 4,833,060, and copolymers such as copoly(styrene-2-hydroxyethyl methacrylate-methyacrylic acid-ethylene glycol dimethacrylate), as described in U.S. Patent No. 4,965,131, are examples of particularly desirable particulate suspension stabilizers that can be used in the practice of this invention.

Hydrophilic colloidal silica is available commercially, for example, under the trade name and in the particle sizes as follows: LUDOX TM, 20 nm; LUDOX HS-40, 12 nm; LUDOX SM, 7 nm; and LUDOX AM, 12 nm; all supplied by E. I. DuPont deNemours Company and NALCOAG 1060, 60 nm supplied by Nalco Chemical Company.

It is known that some suspension stabilizers, for example silica, are used with promoters that are present in the aqueous suspension medium and drive the particulate suspension stabilizer to the interface between the aqueous layer and the polymer droplets formed. When a promoter is used in the method of this invention, any suitable promoter that affects the hydrophilic/hydrophobic balance of the particulate suspension stabilizer in the aqueous suspension medium may be employed to drive the solid particulate suspension stabilizer particles to the interface. Suitable materials include, for example, sulfonated polystyrenes, alginates, carboxymethyl cellulose, various alkyl or polyalkyl ammonium salts, polydiethylaminoethylmethacrylate, water-soluble complex resinous amine condensation products such as water-soluble condensation products of ethylene oxide, urea and formaldehyde, polyethyleneimine and the water soluble condensation products of diethanol amine or methylaminoethanol and adipic acid. A particularly suitable promoter of this type is polydiethanolamine adipate. Also effective as promoters are gelatin, glue, casein, albumin and gluten. Nonionic materials such as methoxy cellulose can be used.

It is sometimes desirable to add to the aqueous suspension a few parts per million of a water-soluble, oil-insoluble polymerization inhibitor, also referred to as a free radical scavenger which is effective to prevent the polymerization of monomer molecules that may diffuse into the aqueous suspension medium. Suitable inhibitors are well-known in the prior art as exemplified by U.S. Patent Nos. 2,932,629 and 4,994,312. Suitable polymerization inhibitors include, for example, potassium dichromate and cupric sulfate pentahydrate.

The polymer particles of the present invention are advantageously utilized as a matting agent in photographic elements. When used as a matting agent, the polymer particles of the present invention can be located any place within the photographic element where it is desirable to have a matting agent. The particles can be incorporated in an overcoat layer that is the outermost layer of the photographic element or they can be incorporated in an underlining layer such as emulsion layer as long as the particle sizes and layer thicknesses are such that the matting agent performs its function of imparting roughness to the surface of the element. Elements containing matting agents are described in further detail in Research Disclosure, June, 1994, Item 36230. Research Disclosure is published by Kenneth Mason Publications, Ltd., Dudley House, 12 North Street, Emsworth, Hampshire P010 70Q England.

Photographic elements in which the matte particles of the present invention can be utilized generally comprise at least one light-sensitive layer, such as silver halide emulsion layer. This layer may be sensitized to a particular spectrum of radiation with, for example, a sensitizing dye, as is known in the art. Additional light-sensitive layers may be sensitized to other portions of the spectrum. The light-sensitive layers may contain or have associated therewith dye-forming compounds or couplers. For example, a red-sensitive emulsion would generally have a cyan coupler associated therewith, a green-sensitive emulsion would be associated with a magenta coupler, and blue-sensitive emulsion would be associated with a yellow coupler. Other layers and addenda such as antistatic compositions, subbing layers, surfactants, filter dyes, protective layers, barrier layers, development inhibiting releasing compounds, and the like can be present in photographic elements of the invention, as is well known in the art. Detailed descriptions of photographic elements and their various layers and addenda can be found in the above-identified Research Disclosure 36320 and in James, "The Theory of the Photographic Process", Fourth Edition, 1977.

If desired, the photographic element can be used in conjunction with a transparent magnetic layer described in Research Disclosure, Nov. 1992, Item 34390.

The following examples are illustrated for a further understanding of the invention.

### EXAMPLE 1 (Invention)

858.7 g methyl methacrylate, 879.8 g methacrylic acid, 21.1 g. ethyleneglycol dimethacrylate, 18.4 g Vazo 52, (2,2'-azobis(2,4-dimethylvaleronitrile) available from Dupont) and 17 g lauroyl peroxide are added to a beaker. In a separate beaker, 2317 g distilled water, 770 g sodium chloride, 3 g potassium dichromate, 63.4 g polydiethanolamine adipate and 998.4 g Ludox AM (colloidal Si available from DuPont) are added. Both phases are stirred separately until all the solids are dissolved or dispersed. The organic phase is added to the aqueous phase and stirred with a marine prop agitator to form a mixture. The mixture is passed through a Crepaco homogenizer operated at 5000 psi to form the desired droplets. The droplets are placed into a flask and reacted overnight at 52 °C while stirring slowly. This yields particles with a mean volume size of 1.0 µm.

### EXAMPLE 2 (Invention)

Same as Example 1 except the following monomer amounts are used: methylmethacrylate - 781 g; methacrylic acid - 967.8 g; ethyleneglycol dimethacrylate - 10.56 g. This yields particles with a mean volume size of 0.96 µm.

### EXAMPLE 3 (Comparative)

Same as Example 1, except sodium chloride is omitted from the process. No useful matting particles are formed as all the monomer droplets agglomerate.

### EXAMPLE 4 (Invention)

Same as Example 1 except 598.8 g Ludox TM is used in place of Ludox AM and polymethylamino ethanol adipate is substituted for polydiethanolamine adipate. This yields particles of a mean volume size of 1.5 µm.

### EXAMPLE 5 (Invention)

Same as Example 1 except 879.8 g methacrylic acid and 879.8 g methyl methacrylate are used and the ethyleneglycol dimethacrylate is omitted. This Example yields particles with a mean volume size of 1.25 µm.

### EXAMPLE 6 (Comparative)

Same as Example 5, except 115.8 g sodium chloride is added to the aqueous phase. No useful matting particles are formed as all the monomer droplets agglomerate.

### EXAMPLE 7 (Invention)

Same as Example 6 except 231.7 g sodium chloride is added to the aqueous phase. This Example yields a wide range of particle sizes from 2-10 µm.

### EXAMPLE 8 (Comparative)

355.2 g methyl methacrylate, 440 g methacrylic acid, 4.8 g ethyleneglycol dimethacrylate, 2.9 g Aerosol OT-100 and 8 g lauroyl peroxide are added to a beaker. In a separate beaker 3330 g distilled water, 16.7 g Triton x-100 and 535 g sodium chloride are added. Both phases are stirred separately until the solids are dissolved or dispersed. The organic phase is added to the aqueous phase and stirred using a marine prop type mixer to form a mixture. The mixture was then passed through a Gaulin mill run at 2700 RPM, 0.01" gap and 1 gal/min flow rate to form the droplets to be polymerized. The droplets are placed into a 5-liter flask and polymerized at 60 °C overnight with gentle agitation. No useful matting particles are formed as all the monomer droplets agglomerate to a solid mass.

### EXAMPLE 9 (Comparative)

To a flask 1980 g styrene, 110 g methacrylic acid, 110 g divinylbenzene and 23.1 g VAZO 52 are added. In a separate beaker 2896 g distilled water, 3.6 g potassium dichromate, 16.5 polydiethanolamine adipate and 183.3 g Ludox AM are added. Both phases are stirred separately until all the solids are dissolved or dispersed. The organic phase is added to the aqueous phase and stirred with a marine prop agitator to form a mixture. The mixture is passed through a Crepaco homogenizer operated at 5000 psi to form the desired droplets. The droplets are placed into a flask and reacted overnight at 52 °C with minimal agitation. This Example yields particles with a mean volume size of 5 µm.

Examples 1,2,4 and 5 use the process of the present invention to produce matte particles having a narrow size distribution without agglomeration. Example 5 shows that crosslinking is not required. Examples 3 and 6 show that without an effective amount of salt to allow stable monomer droplet formation all the monmer droplets agglomerate. Examples 5,6 and 7 are identical except for the salt concentration. Example 7 shows that with a minimally effective amount of salt, matte particles are formed having a less than optimal size distribution. Example 8 shows that with a water soluble surfactant stabilizer no matte particles are formed even when using a high concentration of salt. Example 9 is a duplicate of Example 3 in U.S. Patent 4,920,004 except that salt was omitted. Example 9 shows that when less than 20% carboxylic acid containing monomers are used, matte particles are still produced.

### EXAMPLES 10 and 11

Photographic elements are prepared as follows: A poly(ethylene naphthalate) support having an antihalation layer on one side and an antistatic layer overcoated with a transparent magnetic recording layer on the other side is coated on the antihalation layer with the following imaging forming layers in sequence.
Interlayer: This layer comprises 2,5-di-t-octyl-1,4-dihydroxy benzene (0.075 g/m²), tri(2-ethylhexyl)phosphate (0.113 g/m²), and gelatin (0.86 g/m²).
Slow Cyan Dye-forming Layer: This layer comprises a red sensitive silver bromoiodide emulsion (3.3 mole percent iodide) (0.324 µm grain size) (0.387 g/m² silver), compound CC-1 (0.355 g/m²), IR-4 (0.011 g/m²), B-1 (0.075 g/m²), S-2 (0.377 g/m²), S-3 (0.098 g/m²), and gelatin (1.64 g/m²).
Mid Cyan Dye-forming Layer: This layer comprises a blend of a red sensitive silver bromoiodide emulsion (3.3 mole percent iodide) (0.488 µm grain size) (0.816 g/m² silver) and a red sensitive, tabular grain, silver bromoiodide emulsion (4.5 mole percent iodide) (0.98 µm diameter by 0.11 µm thick) (0.215 g/m² silver), compound CC-1 (0.183 g/m²), IR-3 (0.054 g/m²), B-1 (0.027 g/m²), CM-1 (0.011 g/m²), S-2 (0.183 g/m²), S-3 (0.035 g/m²), S-5 (0.054 g/m²), and gelatin (1.35 g/m²).
Fast Cyan Dye-forming Layer: This layer comprises a red sensitive, tabular grain, silver bromoiodide emulsion (4.5 mole percent iodide) (1.10 µm diameter by 0.11 µm thick) (1.08 g/m² silver), compound CC-1 (0.161 g/m²), IR-3 (0.038 g/m²), IR-4 (0.038 g/m²), CM-1 (0.032 g/m²), S-2 (0.237 g/m²), S-5 (0.038 g/m²), and gelatin (1.35 g/m²).
Interlayer: This layer comprises 2,5-di-t-octyl-1,4-dihydroxy benzene (0.075 g/m²), tri(2-ethylhexyl)phosphate (0.113 g/m²), and gelatin (0.86 g/m²).
Slow Magenta Dye-forming Layer: This layer comprises a blend of a green sensitive, tabular grain, silver bromoiodide emulsion (1.5 mole percent iodide) (0.7 µm diameter by 0.112 µm thick) (0.258 g/m² Ag), and a green sensitive, tabular grain, silver bromoiodide emulsion (1.3 mole percent iodide) (0.54 µm diameter by 0.086 µm thick) (0.409 g/m² Ag), compound M-1 (0.204 g/m²), MM-1 (0.038 g/m²), ST-1 (0.020 g/m²), S-1 (0.26 g/m²), and gelatin (1.18 g/m²).
Mid Magenta Dye-forming Layer: This layer comprises a green sensitive, tabular grain, silver bromoiodide emulsion (4.5 mole percent iodide) (0.61 µm diameter by 0.12 µm thick) (0.646 g/m² Ag), compound M-1 (0.099 g/m²), MM-1 (0.027 g/m²), IR-2 (0.022 g/m²), ST-1 (0.010 g/m²), S-1 (0.143 g/m²), S-2 (0.044 g/m²), and gelatin (1.41 g/m²).
Fast Magenta Dye-forming Layer: This layer comprises a green sensitive, tabular grain, silver bromoiodide emulsion (4.5 mole percent iodide) (0.98 µm diameter by 0.113 µm thick) (0.699 g/m² Ag), compound M-1 (0.052 g/m²), MM-1 (0.032 g/m²), IR-2 (0.022 g/m²), ST-1 (0.005 g/m²), S-1 (0.111 g/m²), S-2 (0.044 g/m²), and gelatin (1.123 g/m²).
Yellow Filter Layer: This layer comprises 2,5-di-t-octyl-1,4-dihydroxy benzene (0.075 g/m²), YD-2 (0.108 g/m²), Irganox 1076 sold by Ciby Geigy (0.01g /m²), S-2 (0.121 g/m²) and gelatin (0.861 g/m²).
Slow Yellow Dye-forming Layer: This layer comprises a blend of a blue sensitive, tabular grain, silver bromoiodide emulsion (4.5 mole percent iodide) (1.4 µm diameter by 0.131 µm thick) (0.161 g/m² Ag), a blue sensitive, tabular grain, silver bromoiodide emulsion (1.5 mole percent iodide) (0.85 µm diameter by 0.131 µm thick) (0.0.108 g/m² Ag), and a blue sensitive, tabular grain, silver bromoiodide emulsion (1.3 mole percent iodide) (0.54 µm diameter by 0.086 µm thick) (0.161 g/m² Ag), compound Y-1 (0.915 g/m²), IR-1 (0.032 g/m²), B-1 (0.0065 g/m²), S-1 (0.489 g/m²), S-3 (0.0084 g/m²), and gelatin (1.668 g/m²).
Fast Yellow Dye-forming Layer: This layer comprises a blue sensitive, tabular grain, silver bromoiodide emulsion (4.5 mole percent iodide) (2.3 µm diameter by 0.128 µm thick) (0.43 g/m² Ag), compound Y-1 (0.15 g/m²), IR-1 (0.032 g/m²), B-1 (0.0054 g/m²), S-1 (0.091 g/m²), S-3 (0.0070 g/m²), and gelatin (0.753 g/m²).
UV Protective Layer: This layer comprises compound UV-1 (0.111g/m²), UV-2 (0.111 g/m²), S-4 (0.222 g/m²), silver bromide Lippmann emulsion (0.215 g/m² Ag), and gelatin (0.7 g/m²).

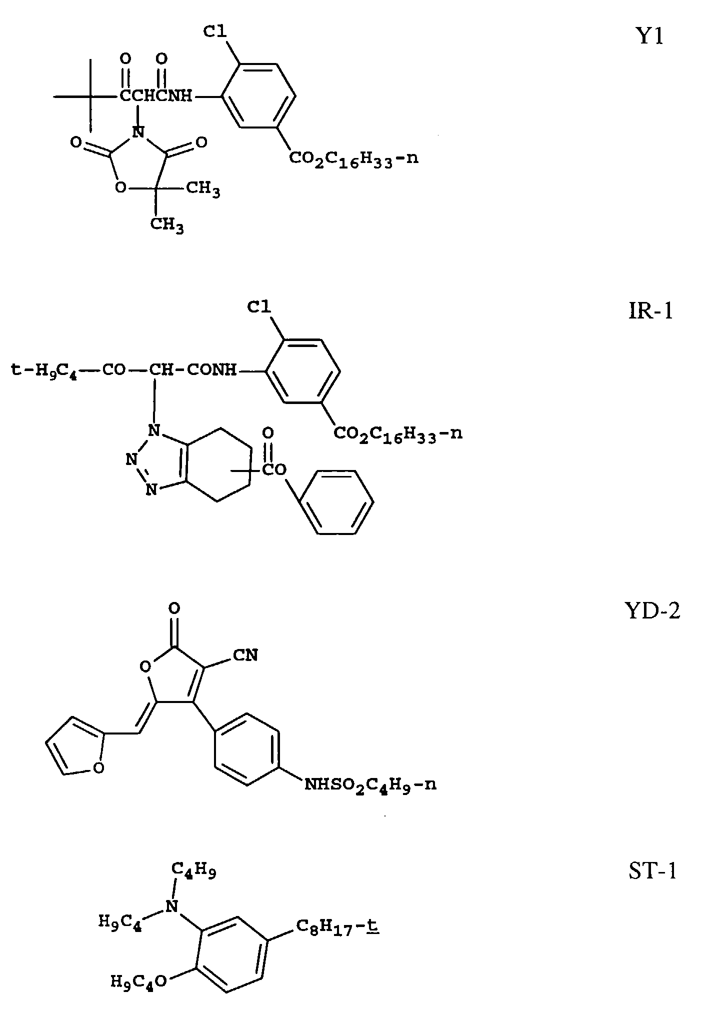

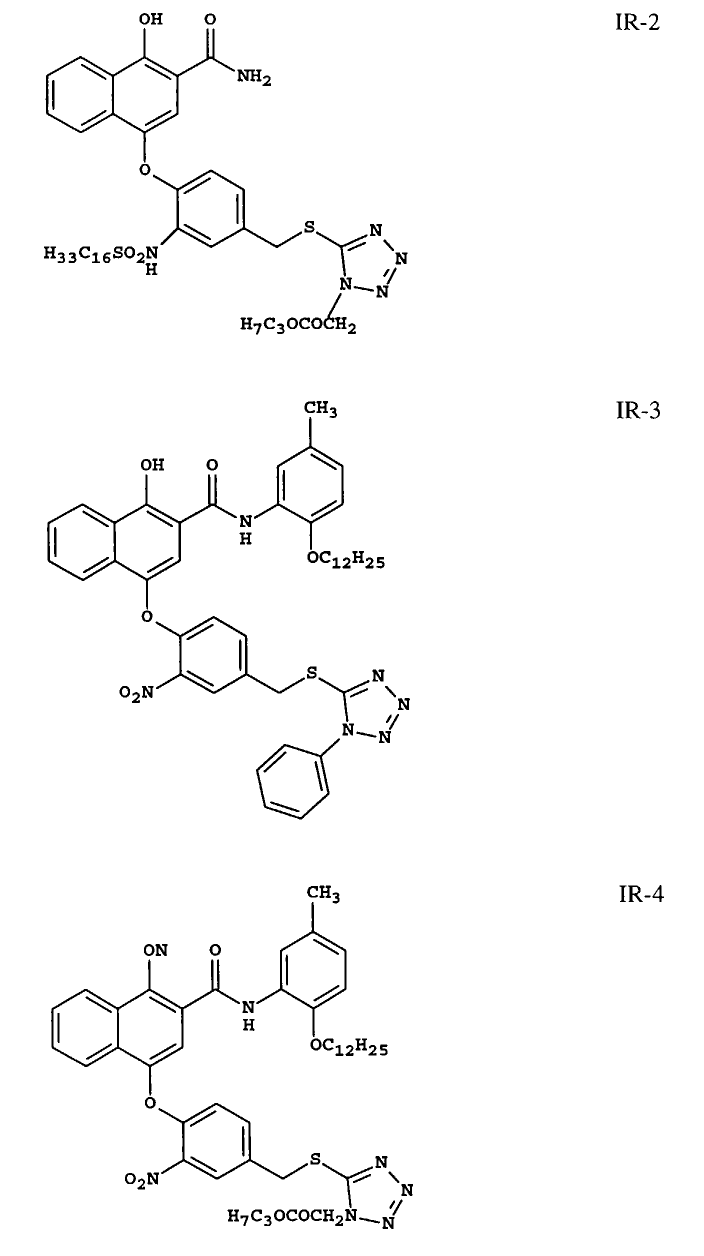

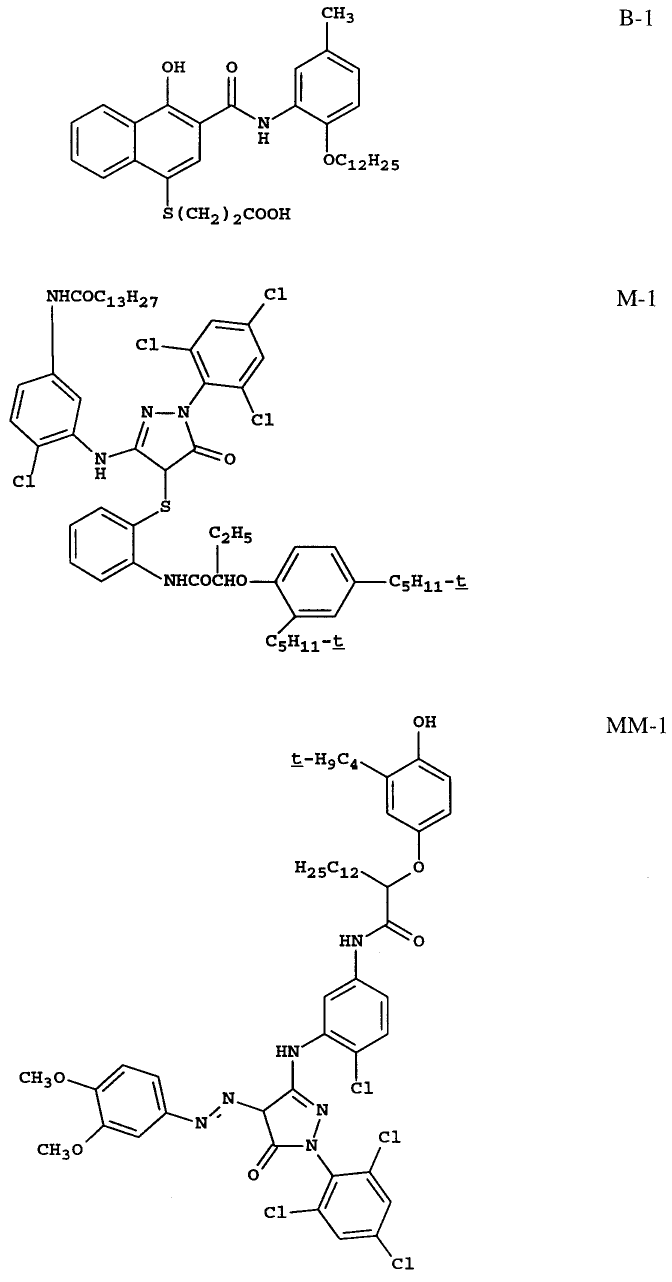

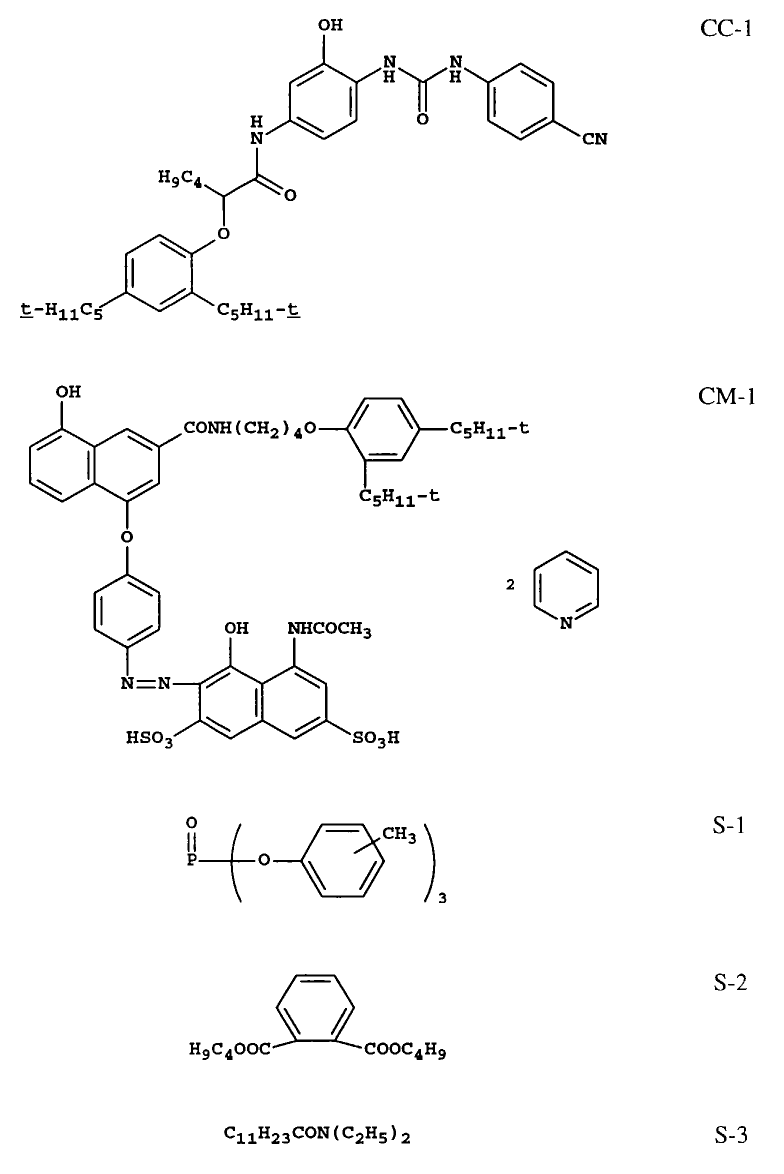

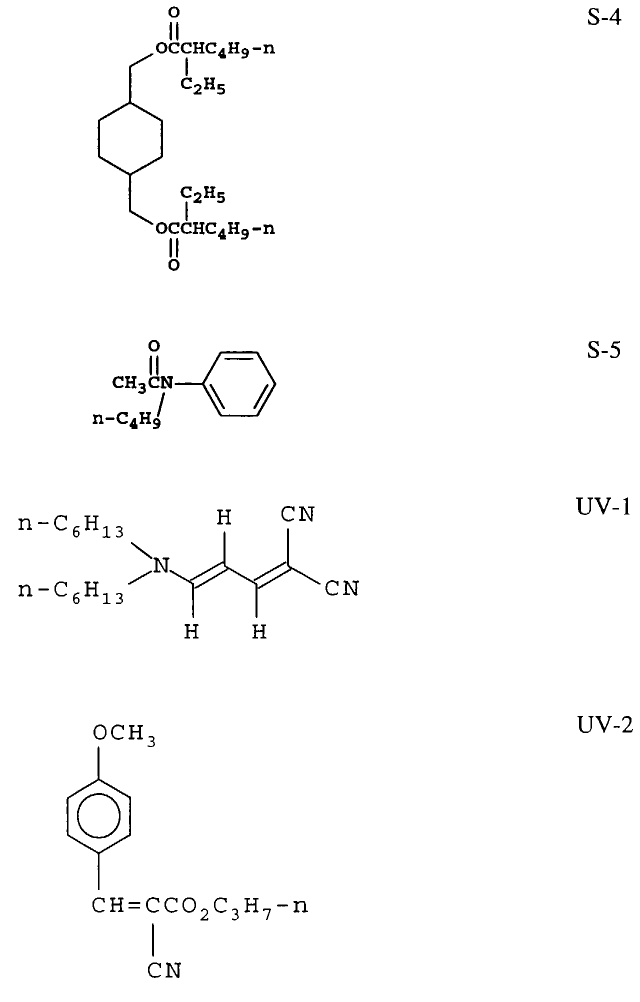

### Preparation of Light-Insensitive Layer

A light-insensitive layer containing gelatin binder and matting agents listed in Examples 1 and 2 are coated on the top of the UV layer and have the composition listed in Tabe 1.

**Table 1**

| Composition of the Light-Insensitive Layer (Dry Weight) | |
|---|---|
| Gelatin, lime processed | 888 mg/m² |
| Silicone lube, DC-200 (Dow Corning) | 40.1 mg/m² |
| Fluorad FC-134 (3M Co.) | 3.9 mg/m² |
| Aerosol OT (American Cyanamide) | 21.5 mg/m² |
| Surfactant Olin 10G (Olin Corp.) | 27.2 mg/m² |
| Matte (Examples 1 and 2) | 107.6 mg/m² |

The matte particles manufactured by the process of the present invention provide excellent abrasion resistance, excellent ferrotyping performance, and good printing granularity. Furthermore, Examples 10 and 11 provide layers contining matte particles which are free of agglomerates.

## Claims

1. A process for making polymeric particles comprising:
polymerizing an ethylenically unsaturated monomer as a dispersed phase suspended in an aqueous phase, said aqueous phase containing a water-insoluble particulate stabilizer having a size of less than 100 nm and an effective amount of water-soluble inorganic salt to allow formation of stable monomer droplets in the aqueous phase, said monomer droplets comprising at least 20% of a carboxylic acid containing monomer.

2. The process according to claim 1, wherein the carboxylic acid containing monomer is selected from the group consisting of acrylic monomers, monoalkyl itaconates, monoalkyl maleates, citraconic acid and styrenecarboxylic acid.

3. The process according to claim 1, wherein the carboxylic acid containing monomer is selected from the group consisting of acrylic acid and methacrylic acid.

4. The process according to claim 1, wherein the water-insoluble particulate stabilizer comprises colloidal silica.

5. The process according to claim 1, wherein the water-soluble inorganic salts present in the aqueous phase is in a concentration of from 10% to 50%.

6. An imaging element comprising:
a support; and
at least one layer containing polymer particles of the formula:
(A)ₓ(B)_{y}
where A is an ethylenically unsaturated monomer containing carboxylic acid groups, B is a water-insoluble ethylenically unsaturated monomer, x is greater than 20%, y is equal to (100% -x), said particles covered with a layer of a water-insoluble particulate stabilizer having a size less than 100 nm.

7. The imaging element according to claim 6, wherein monomer A is selected from the group consisting of acrylic monomers, monoalkyl itaconates, monoalkyl maleates, citraconic acid and styrenecarboxylic acid.

8. The imaging element according to claim 6, wherein the carboxylic acid containing monomer is selected from the group consisting of acrylic acid and methacrylic acid.

9. The imaging element according to claim 6, wherein monomer B is selected from the group consisting of alkyl esters of acrylic acid, alkyl esters of methacrylic acid, hydroxyalkyl esters of acrylic acid, hydroxyalkyl esters of methacrylic acid, nitriles of acrylic acid, nitriles of methacrylic acid, amides of of acrylic acid, amides of methacrylic acid, vinyl esters, and vinyl aromatic compounds, dialkyl maleates; dialkyl itaconates; dialkyl methylene-malonates, esters of unsaturated monohydric alcohols with unsaturated monocarboxylic acids, dienes, esters of saturated glycols, esters of diols with unsaturated monocarboxylic acids, polyfunctional aromatic compounds, trimethyol propane trimethacrylate and pentaerythritol tetramethacrylate.
